# EUROPÄISCHE PATENTANMELDUNG

(11) **EP 3 522 365 A1**
(43) Veröffentlichungstag der Anmeldung: **07.08.2019**
(21) Anmeldenummer: 19155014.4
(22) Anmeldetag: 01.02.2019
(51) Int. Cl.: H02P 27/04, A47J 43/06, A47J 43/07, G05B 9/02

(54) **GEWERBEKÜCHENMASCHINE**

(30) Priorität: 01.02.2018 DE 102018102307; 26.08.2018 DE 102018120796
(71) Anmelder: Krefft Großküchentechnik GmbH, 76437 Rastatt (DE)
(72) Erfinder: Bauerdick, Aloys, 42279 Wuppertal (DE)
(74) Vertreter: Tarvenkorn, Oliver

(57) **Zusammenfassung**

Eine Gewerbeküchenmaschine (100) für die Zerkleinerung und/oder Durchmischung von Lebensmitteln umfasst wenigstens:
- ein Grundgehäuse (60);
- einen Motor (40) mit einer Getriebeeinheit (41), welche eine Antriebswelle zur Verbindung mit einem Vorsteckgerät (70) aufweist;
- eine Motorregeleinheit zur Drehzahlsteuerung des Motors (40);
- einen Ein- und/oder Ausschalter, eine Drehzahleinstelleinheit und wenigstens ein Indikatorelement (13) zur Anzeige eines Betriebszustandes.

Die Motorregeleinheit ist ein Frequenzumrichter (30) und der Motor (40) ist ein Drehstrommotor, der über den Frequenzumrichter (30) angesteuert wird. Vorgesehen sind außerdem ein Start-Taster (11) als Einschalter und ein Stopp-Taster (12) als Ausschalter. Der Start- und der Stopp-Taster (11, 12) sind auf der Außenseite des Grundgehäuses (60) angeordnet und mit einer Bedienersteuerungseinheit (20) verbunden.

Der Start- und der Stopp-Taster (11, 12) sind jeweils einzeln mit einem separaten Logikeingang des Frequenzumrichters (30) sowie mit einem gemeinsamen Steuerspannungseingang des Frequenzumrichters (30) verbunden. Die Bedienersteuerungseinheit (20) ist über einen Schaltausgang des Frequenzumrichters (30) aktivierbar.

## Beschreibung

Die Erfindung betrifft eine Gewerbeküchenmaschine mit den Merkmalen des Oberbegriffs des Anspruchs 1.

Eine solche Gewerbeküchenmaschine wird auch als Universalküchenmaschine bezeichnet, weil eine Grundeinheit mit einem starken Antrieb versehen ist und verschiedenartige Vorsteckgeräte damit benutzt werden können. Sie wird insbesondere zum Zerkleinern und Durchmischen von Lebensmitteln eingesetzt. Bei gewerblich genutzten Küchenmaschine muss ein sicherer Betrieb nach Maßgabe der Unfallverhütungsvorschriften gewährleistet werden, um eine Bauartzulassung zu erhalten. Dazu muss insbesondere gewährleistet werden, dass jeder unbeabsichtigte Anlauf des Motors verhindert wird, wie auch, dass eine gewollte Motorabschaltung jederzeit schnell und zuverlässig ausgeführt wird.

Eine bekannte Gewerbeküchenmaschine besitzt einen dreiphasigen Anschluss, um mit einem entsprechenden Motor die erforderlichen Drehmomente aufbringen zu können. Jedoch stehen auch in einer gewerblichen Küche nicht beliebig viele Anschlüsse dieser Art zur Verfügung. Die Einstellbarkeit von Drehzahl und Drehmoment ist bekanntermaßen begrenzt und der Wirkungsgrad schlecht. Die an sich bekannte Verwendung von Motoren zusammen mit einem Frequenzumrichter bringt im Zusammenspiel mit der für Komfortfunktionen und Anzeigen notwendigen Bedienersteuerungseinheit eine weitere mögliche Fehlerquelle, so dass bislang durch Prüfinstitute, wie z. B. die Deutsche Gesetzliche Unfallversicherung e.V. (DGUV), Bauartzulassungen für ein solches Antriebskonzept nicht erteilt wurden.

Die Aufgabe der Erfindung besteht somit darin, eine im Sinne der gesetzlichen Unfallverhütungsvorschriften sichere und somit für den gewerblichen Einsatz zertifizierbare Gewerbeküchenmaschine zu schaffen.

Diese Aufgabe wird durch eine Gewerbeküchenmaschine mit den Merkmalen des Anspruchs 1 gelöst.

Das Grundkonzept der Erfindung besteht darin, zum Motorstart wie zum Motorstopp gesonderte Taster vorzusehen und einen bauartgeprüften und mit redundanten Sicherheitsprüfungen versehenen Frequenzumrichter ohne Zwischenschaltung einer individuell oder eventuell sogar kundenspezifisch für die Gewerbeküchenmaschine angefertigten Bedienersteuerungseinheit direkt anzusprechen.

Zwar lässt das angeschlossene Bedienfeld Eingaben des Benutzers z. B. zum Betriebsmodus zu und zeigt ihm Funktionen und Soll- oder Istwerte z. B. der Drehzahl an, jedoch besitzt die Bedienersteuerungseinheit keinerlei Einfluss auf den Motoranlauf oder den Motorstopp. Hierzu gibt es allein eine direkte Verbindung der Start- und Stopp-Taster am Bedienfeld mit dem Frequenzumrichter. Sollte es zu Programmfehlern oder elektrischen Defekten in der Bedienersteuerungseinheit kommen, kann dadurch weder ein Motoranlauf ausgelöst werden noch ein gewollter Motorstopp verhindert werden. Der Besitzer einer Gewerbeküchenmaschine kann keine Manipulation vornehmen, etwa an der Bedienersteuerung, weil die Grundsicherheit im Frequenz umrichter fest integriert ist und durch eine ebenfalls dort integrierte SPS-Steuerung ergänzt werden kann, wobei diese nur durch den Hersteller des Frequenzumrichters änderbar ist.

Auch sonstige Sicherheitseinrichtungen wie ein Schlagtaster als Not-AusSchalter oder ein Magnetschalter, über den der korrekte Sitz von Vorsteckgeräten abgefragt wird, wirken nicht auf die Bedienersteuereinheit, sondern direkt auf den Sicherheitsteil des Frequenzumrichters.

Der Vorteil liegt weiterhin darin, dass Änderungen und Ergänzungen an der Bedienersteuerungseinheit herstellerseitig jederzeit vorgenommen werden können, ohne sicherheitsrelevante Teile zu beeinflussen so dass die Zertifizierung hinsichtlich der Einhaltung von Sicherheitsvorschriften nicht gefährdet werden kann. Bleiben die Änderungen des Herstellers auf die Bedienersteuerungseinheit und zugehörige Teile am Bedienfeld - bis auf Start- und Stopp-Taster- sowie die Software in der Bedienereinheit beschränkt, ist keine neue Bauartzulassung erforderlich, weil das Sicherheitskonzept nicht verändert wird. Der Hersteller der Gewerbeküchenmaschine kann also jederzeit neue Komfortfunktionen oder kundenspezifische Funktionen in der Software der Bedienereinheit implementieren, wobei die Bedienersicherheit niemals gefährdet ist. Vorzugsweise ist der Stopp-Taster als Öffner in einem Ruhestromkreis und der Start-Taster als Schließer ausgebildet. Dabei sollten die Kabelverbindungen über eine gemeinsame, mehradrige Kabelverbindung und eine mehrpolige Steckverbindung erfolgen. Kommt es zu Beschädigungen oder ist die Verbindung nicht korrekt hergestellt, öffnet der Ruhestromkreis und ein STOPP-Signal liegt direkt am Frequenzumrichter an. Auf einem separaten Eingang kann das Startsignal vom Start-Taster angelegt werden, das jedoch innerhalb der programmierbaren Logik des Frequenzumrichters oder durch sonstige elektrische Schaltungen eine niedrigere Priorität besitzt, so dass bei einem nicht geschlossenen Ruhestromkreis jede weitere Eingabe unmöglich ist. Durch diese Ausbildung des STOPP-Kreislaufs wird es möglich, das Bedienfeld einen direkten Einfluss auf die Motorfunktion nehmen zu lassen, aber nur für die STOPP-Funktion und nicht für die START-Funktion. Wird der Ruhestromkreis durch einen Schaltkontakt eines Schalters wie eines Relais oder Optokopplers geführt, kann der Ruhestromkreis über den Mikrocontroller der Bedienersteuerungseinheit unterbrochen und der Motor damit angehalten werden, was z.B. notwendig ist, um eine Timerfunktion zu implementieren und den Motor nach einer vorgewählten Arbeitszeit selbststätig abzuschalten.

Erfindungswesentlich ist weiterhin, dass die Bedienersteuereinheit, insbesondere der Mikrocontroller darauf, direkt von einem Sicherheitssignal des Frequenzumrichters aktiviert wird, oder dass das Sicherheitssignal des Frequenzumrichters sogar direkt als Stromversorgung der Bedienersteuereinheit benutzt wird: liegt nach der internen Sicherheitsüberwachung im Frequenzumrichter kein sicherer Betriebszustand vor, ist die Bedienersteuerung funktionslos, was dem Bediener z. B. durch Ausfall der Anzeigen im Bedienfeld signalisiert werden kann. Unabhängig von Fehlern in der Bedienersteuerungseinheit haben aber die Start- und Stopp-Tasten jederzeit Einfluss auf den Motor.

Vorzugsweise erfolgt die Verbindung des Frequenzumrichters mit der Bedienersteuerung über einen Optokoppler, so dass selbst Kurzschlüsse in der Bedienersteuerungseinheit rückwärts gerichtet keine Beeinflussung des Frequenzumrichters auslösen können.

Die Erfindung wird nachfolgend mit Bezug auf das in den Zeichnungen dargestellte Ausführungsbeispiel näher erläutert. Die Figuren zeigen im Einzelnen:
- Fig. 1: eine Gewerbeküchenmaschine in schematischer seitlicher Ansicht;
- Fig. 2: einen Stromlaufplan; und
- Fig. 3, 4: Ablaufdiagramme zum Betrieb einer Gewerbeküchenmaschine.

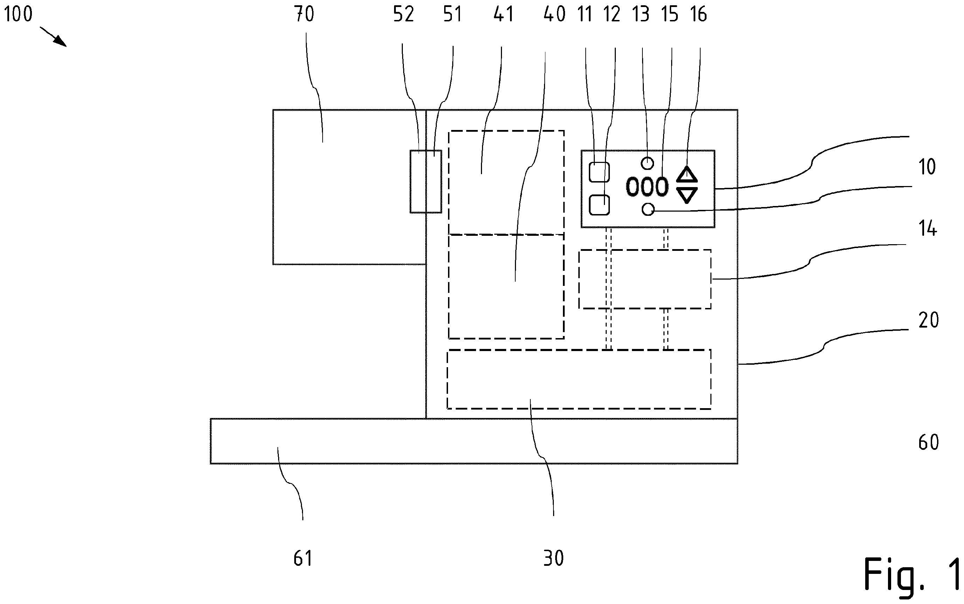

In Figur 1 ist das Schema einer Gewerbeküchenmaschine 100 nach der Erfindung dargestellt. Diese besteht im Wesentlichen aus einem Gehäuse 60 mit einem Standfuß 61 und einem auf der Außenseite angebrachten Bedienfeld 10. Dieses besitzt zumindest einen Start-Taster 11 und einen Stopp-Taster 12. Eine Indikatorleuchte 13 zeigt den sicheren Betriebszustand und/oder einen Fehler an. Eine zweite Indikatorleuchte 14 zeigt eine Überhitzung des Motors an. Ein Tastenpaar 16 dient der Sollwerteingabe der Drehzahl.

Optional kann das Bedienfeld 10 um weitere Anzeigen und Tasten für eine Zeitvorwahl ergänzt werden.

Innerhalb des Gehäuses 60 ist ein Motor 40 mit einer Getriebeeinheit 41 und einem Frequenzumrichter 30 angeordnet. Ein Vorsteckgerät 70 wie ein Knet- und Rührwerk, ein Gemüseschneider oder ein Fleischwolf kann an das Gehäuse angesetzt und mit einer Abtriebswelle der Getriebeeinheit 41 gekoppelt werden. Dabei besitzt das Vorsteckgerät 70 einen codierten Magneten 52, der mit einer zugehörigen Magnetschalter 51 am Gehäuse 60 zusammenwirkt. Magnet 52 und Magnetschalter 51 sind so aufeinander angepasst, dass diese Komponenten nur in genau einer axialen und radialen Lage zueinander koppelbar sind, in welcher eine sichere Betriebsweise möglich ist. Entsprechend liegt in der sicheren Betriebsweise durch den Magnetschalter 51 ein Freigabesignal am Frequenzumrichter 30 an. Der Magnetschalter 51 enthält dazu Reed-Relais, die in einer bestimmten Reihenfolge und in einem bestimmten zeitlichen Fenster durch den aufgesetzten Magneten 52 angesprochen werden müssen.

Zwischen dem Bedienfeld 10, der Bedienersteuerungseinheit 20 und dem Frequenzumrichter 30 bestehen verschiedene Kabelverbindungen.

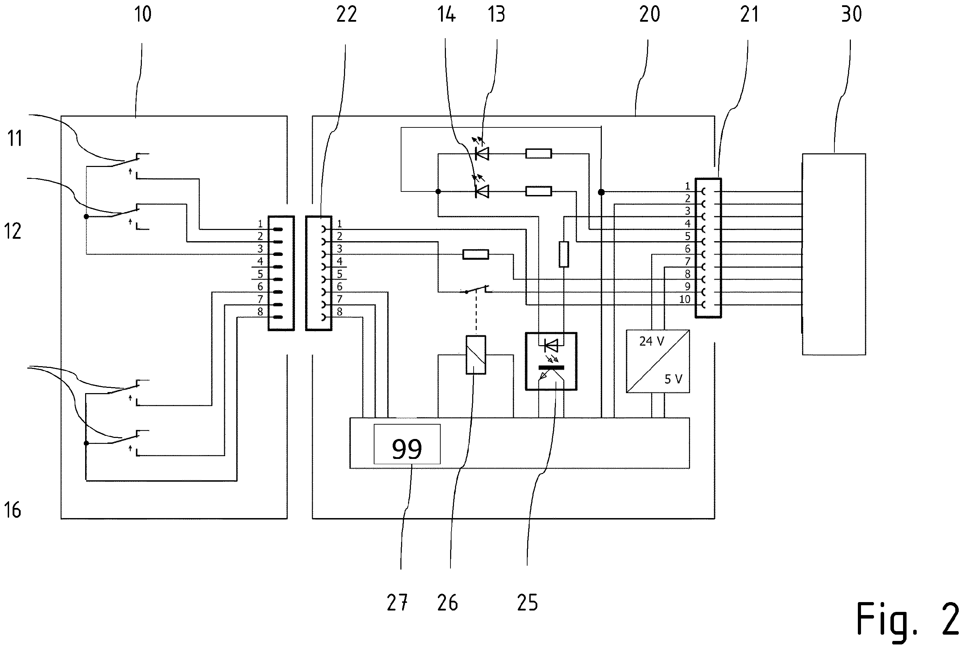

Ein grundlegender Stromlaufplan der die Einheiten 10, 20 und 30 umfasst, ist in Figur 2 abgebildet.

Die Bedienersteuerungseinheit 20 verfügt über wenigstens einen Steckverbinder 21 und eine Klemmleiste 21. Am Steckverbinder 22 wird das Bedienfeld 10 angeschlossen. An die Klemmleiste 21 wird der Frequenzumrichter 30 angeschlossen, außerdem erfolgt darüber die Stromversorgung der Bedienersteuerungseinheit 20. Die Klemmen sind wie folgt belegt:

| | | |
|---|---|---|
| 1 | Ausgang Sollwert - | verbunden mit GND |
| 2 | Ausgang Sollwert + | 0 bis 5 VDC |
| 3 | Eingang "Betrieb" | 24 VDC gegen GND; Optokopplereingang |
| 4 | Eingang "Übertemperatur" | 24 VDC gegen GND; LED |
| 5 | Eingang "Fehlerzustand" | 24 VDC gegen GND; LED |
| 6 | GND | |
| 7 | Eingang Stromversorgung | 6,5 bis 32 VDC gegen GND |
| 8 | Eingang Steuerspannung | 24 VDC gegen GND (vom Frequenzumrichter) |
| 9 | Ausgang "Stopp" | 24 VDC von Klemme 8 über Ruhekontakt |
| | Ausgang "Start" | 24 VDC von Klemme 8 über Arbeitskontakt |

Bei Stromversorgung der Bedienersteuerungseinheit 20 über den Steuerspannungsausgang des Frequenzumrichters 30 kann Klemme 7 mit Klemme 8 verbunden werden.

Das Bedienfeld 10 verfügt über einen Start- Taster 11 und einen Stopp-Taster 12 sowie über ein Tasterpaar 16 zur Änderung der Drehzahl. Eine Sieben-Segment-Anzeige 27 stellt den aktuellen Wert für die Drehzahl dar. Außerdem sind zwei LEDs als Sicherheitskontrolleuchte 13 für die Anzeige eines Fehlerzustands und als Indikatorleuchte 14 für eine Übertemperatur des Frequenzumrichters 30 vorgesehen.

Nach dem Einschalten des Gerätes werden die zuletzt verwendeten, das heißt, bei der letzten Betätigung des Start-Tasters 11 vorliegenden Einstellungen für Drehzahl und Laufzeit erneut vorgeschlagen. Diese Werte können mit den entsprechenden Tastern 16 schrittweise erhöht oder verringert werden. Minimal- und Maximalwert sowie Schrittweite sind konfigurierbar

Den analogen Drehzahlsollwert für den Frequenzumrichter 30 setzt die Bedienersteuerungseinheit 20 stets auf 0 V, wenn der Motor nicht läuft.

Durch Betätigung des Start-Tasters 11 wird der Motor 40 eingeschaltet. Der Frequenzumrichter 30 meldet daraufhin den Zustand "Betrieb" über den Eingang eines Optokopplers 25. Erst dann wird entsprechend der Drehzahleinstellung der analoge Drehzahlsollwert ausgegeben. Gleichzeitig beginnt die Zeitanzeige herunterzuzählen.

Um ein versehentliches Einschalten beim Reinigen zu verhindern, kann vorgesehen sein, dass der Start-Taster 11 zweimal kurz hintereinander betätigt werden muss.

Die beim Start des Motors 40 aktuellen Einstellungen für Drehzahl und Laufzeit werden zu diesem Zeitpunkt zwischengespeichert, um sie nach vorausgegangenem Motor-Stopp für den nächsten Lauf wieder voreinstellen zu können. Die Speicherung erfolgt auch im EEPROM, um dem Benutzer nach zwischenzeitlichem Ausschalten der Gewerbeküchenmaschine 100 die zuletzt verwendeten Einstellungen wieder vorzuschlagen.

Während der Motor 40 läuft, können die Einstellungen für Drehzahl und Zeit beliebig verändert werden; die neuen Einstellungen werden dabei sofort für den weiteren Motorlauf berücksichtigt. Die beim Start zwischengespeicherten Einstellungen werden dadurch nicht verändert.

Durch Betätigung des Stopp-Tasters 12 wird der Motor ausgeschaltet. Der Frequenzumrichter 30 meldet dann nicht mehr den Zustand "Betrieb" über den Eingang des Optokopplers 25, woraufhin wieder 0 V als analoger Drehzahlsollwert ausgegeben wird. Derselbe Stopp-Vorgang wird von der Bedienersteuerungseinheit 20 ausgelöst, wenn die eingestellte Zeit abgelaufen ist.

Nach dem Stopp-Vorgang werden die beim Starten zwischengespeicherten Einstellungen für Drehzahl und Laufzeit wieder in der Anzeige 27 dargestellt.

Ist beim Einschalten des Gerätes der Taster 16 zum Erhöhen der Drehzahl gedrückt, wechselt die Bedienersteuerungseinheit 20 in den Modus "Parametereingabe" und es können verschiedene, im EEPROM des Controllers gespeicherte Systemparameter verändert werden. In diesem Modus ist der Kontakt an einem Relais 26 geöffnet und der Motor 40 kann nicht gestartet werden. Nach Änderung der Parameter muss das die Gewerbeküchenmaschine 100 zunächst aus- und dann wieder eingeschaltet werden, um wieder in den normalen Betriebsmodus zu kommen, weil nur so das Relais 26 zurückgesetzt werden kann. An dieser Stelle besteht die einzige direkte Einflussnahme der Bedienersteuereinheit 20 auf den Motorbetrieb, jedoch ist nur das Stoppen möglich, was zu einer Erhöhung der Sicherheit führt.

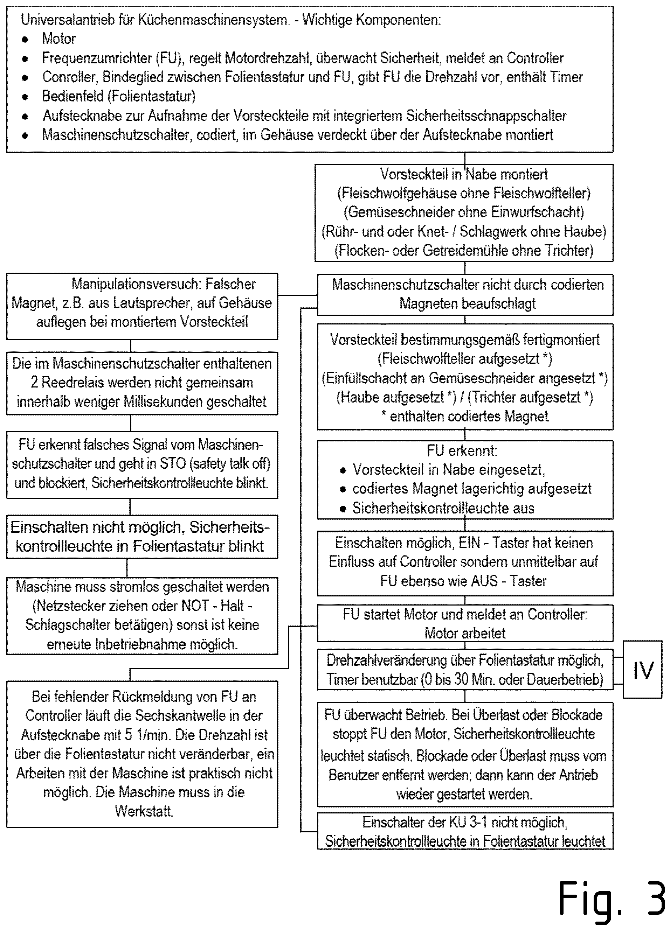

Figur 3 stellt beispielhaft die Schritte im Betrieb der Gewerbeküchenmaschine 100 dar, wobei das Zusammenwirken folgender Komponenten wesentlich ist:
- der Motor 40;
- der Frequenzumrichter 30 als Motorregeleinheit; dieser überwacht die Sicherheit, meldet an Controller
- ein Bedienfeld 10 z. B. mit Folientastatur, das den Start- und Stopp-Taster 11, 12, die Drehzahleinstelleinheit 16 und die Sicherheitskontrollleuchte 13 umfasst;
- die Bedienersteuerungseinheit 20 als Bindeglied zwischen der Drehzahleinstelleinheit 16 und dem Frequenzumrichter 30, hierüber wird dem Frequenzumrichter 30 die Drehzahl und ggf. die Laufzeit über einen Timer vorgegeben;
- eine Aufstecknabe zur Aufnahme der Vorsteckteile 70 mit einem integriertem Sicherheitsschnappschalter;
- ein codierter Maschinenschutzschalter 51, der im Gehäuse 60 verdeckt an der Aufstecknabe montiert ist.

Zur Inbetriebnahme wird ein Vorsteckteil 70 in der Aufstecknabe montiert, z. B.:
- Fleischwolfgehäuse
- Gemüseschneider
- Rühr- und oder Knet- / oder Schlagwerk
- Flocken- oder Getreidemühle.

Diese Vorsteckteile 70 weisen jeweils wenigstens einen codierten Magneten 52 auf, der in einer bestimmten Position und Winkellage in Bezug auf den am Gehäuse angebrachten Maschinenschutzschalter 51 positioniert ist.

Die Gewerbeküchenmaschine 100 kann nun eingeschaltet werden, jedoch leuchtet zunächst die Sicherheitskontrollleuchte 14 auf, wenn z. B. die folgenden Sicherheitseinrichtungen bei den Vorsteckteilen 70 fehlen:
- beim Fleischwolfgehäuse der Fleischwolfteller;
- bei Gemüseschneidern der Einwurfschacht;
- beim Rühr- und oder Knet- / oder Schlagwerk die Haube oder
- bei der Flocken- oder Getreidemühle der Trichter.

Sobald das Vorsteckteil 70 jedoch aufgesteckt und ordnungsgemäß mit allen Sicherheitseinrichtungen versehen ist, wird der Maschinenschutzschalter 51 über den codierten Magneten 52 betätigt und ein Freigabesignal an den Frequenzumrichter 30 gegeben. Darauffolgend wird die nach dem Einschalten zunächst leuchtende Sicherheitskontrollleuchte 13 ausgeschaltet. Erst jetzt ist es möglich, den START-Taster 11 zu betätigen und damit den Motor zu starten. Beim Starten wirkt der START-Taster 11 direkt auf den Frequenzumrichter 30 und umgeht dabei die Bedienersteuerungseinheit 20. Gleiches gilt für den STOPP-Taster 12.

Sobald der Motor mittels des Frequenzumrichters 30 gestartet worden ist, geht ein Signal an die Bedienersteuerungseinheit 20, die darüber aktiviert wird, so dass nun z. B. eine Drehzahländerung über die Tasten 16 auf der Folientastatur möglich ist. Sofern die Gewerbeküchenmaschine 100 mit einem Timer versehen ist, kann die Zeitdauer für den Betrieb eingestellt werden, z. B. von 0 bis 30 Min. oder Dauerbetrieb.

Erfolgt in beim Motorstart keine Aktivierung der Bedienersteuerungseinheit 20, dann kann auch die Drehzahl nicht verändert werden. Die Sechskantwelle in der Aufstecknabe läuft konstant mit 5 Umdrehungen /min, so dass ein Arbeiten mit der Maschine praktisch nicht möglich ist und eine Werkstattreparatur erforderlich ist. Dennoch hat der Ausfall der Bedienersteuerungseinheit 20 keinen Einfluss auf den sicheren Betrieb der Gewerbeküchenmaschine 100.

Der Frequenzumrichter 30, nicht die Bedienersteuerungseinheit 20, überwacht den laufenden Betrieb. Bei Überlast oder Blockade, stoppt der Frequenzumrichter 30 den Motor und aktiviert die Sicherheitskontrollleuchte 13. Auch diese ist also eine Komponente, die unter Umgehung der Bedienersteuerungseinheit 20 aktiviert wird. Bei einer Blockade oder Überlast muss diese vom Benutzer beseitigt werden, damit der Motor wieder gestartet werden kann.

Die vorstehende Beschreibung gilt für den Normalbetrieb. Ausgehend vom Aufstecken des Vorsteckgeräts 70 können aber auch zwei weitere Betriebszustände eingenommen werden:
- Wenn beim Aufstecken der Maschinenschutzschalter gar nicht betätigt wird, ist ein Einschalten der Gewerbeküchenmaschine nicht möglich. Die Sicherheitskontrollleuchte 13 leuchtet solange, bis das Vorsteckgerät mit Sicherheitseinrichtungen korrekt montiert worden ist. Dann kann ohne weitere Maßnahme der START-taster 11 betätigt werden, wie oben beschrieben.
- Möglicherweise liegt auch ein Manipulationsversuch vor. Der Maschinenschutzschalter 51 besitzt vorzugsweise zwei Reedrelais, die innerhalb weniger Millisekunden gemeinsam durch den Magneten geschaltet werden müssen, um eine Sicherheitsfreigabe zu erreichen. Wird durch Auflegen eines beliebigen Fremdmagneten versucht, den Maschinenschutzschalter 51 zu manipulieren, so wird entweder nur eines der Reed-Relais' geschaltet oder die Aktivierung erfolgte nicht in der richtigen zeitlichen Abfolge. Dieses falsche Signal wird im Frequenzumrichter erkannt, wodurch der Frequenzumrichter blockiert und die Sicherheitskontrolleuchte blinkend geschaltet wird.

Nach einer Ausführungsform der Erfindung kann der Blockadezustand nur durch Stromlosschalten des Frequenzumrichters und Neustart der Maschine erreicht werden, beispielsweise durch Ziehen des Netzsteckers oder durch Betätigen des Not-Aus-Knopfes.

Möglich ist aber auch, dass die Rückstellung nur durch Betätigen eines Schlüsselschalters möglich ist, so dass beispielsweise Vorgesetzte und Sicherheitsbeauftragte von dem Manipulationsversuch in Kenntnis gesetzt werden.

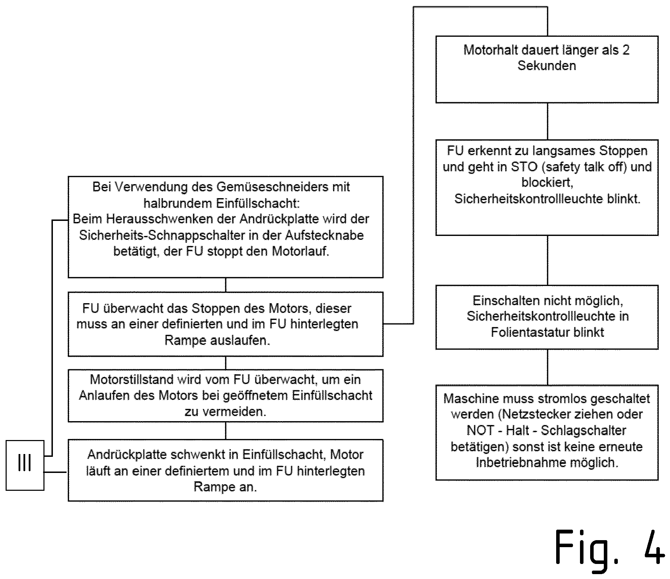

Figur 4 ist ein ergänzender Funktionsablauf dargestellt, der an der Stelle IV in Figur 3 ansetzt und für ein spezielles Vorsteckgerät, nämlich einen Gemüseschneider mit halbrundem Einfüllschacht und Andrückplatte gilt. Dieses Vorsteckgerät ist besonders sicherheitskritisch, da für einen effizienten Betrieb ständig schnell Gemüse nachgelegt werden muss. Ein Öffnen und Schließen eines allseitig abgeschirmten Arbeitsraums wäre dafür viel zu umständlich.

Beim Herausschwenken der Andrückplatte wird der Sicherheits-Schnappschalter in der Aufstecknabe betätigt, der Frequenzumrichter stoppt den Motorlauf. Der Frequenzumrichter überwacht das Stoppen des Motors. Dessen Drehzahl muss an einer definierten und im Frequenzumrichter hinterlegten Rampe auslaufen, bevor der Motor wieder gestartet werden kann.

Der Motorstillstand wird vom Frequenzumrichter überwacht, um ein Anlaufen des Motors bei geöffnetem Einfüllschacht zu vermeiden. Sobald ein kurzer Motorstillstand vorgelegen hat und die Andrückplatte wieder in den Einfüllschacht schwenkt, kann der Motor wieder im Normalbetrieb anlaufen, wobei die Drehzahl ebenfalls mit einer definierten, im Frequenzumrichter hinterlegten Rampe anläuft.

Bei der Überwachung des Stopp-Vorgangs des Motors wird möglicherweise festgestellt, dass der Anhaltevorgang gemäß den für eine solche Gewerbeküchenmaschine anwendbaren Sicherheitsvorschriften mehr als 2 Sekunden dauert. Durch die im Frequenzumrichter abgelegten Sicherheitsprozeduren wird dies als Fehlerzustand erkannt, denn unabhängig von den Ursachen für das verzögerte Auslaufen des Motors besteht beim Gemüseschneider die Gefahr, dass der Benutzer an der herausgeschwenkten Andrückplatte vorbei in den Arbeitsraum des Gemüseschneiders greifen könnte. Die Zeitdauer von 2s ist so bemessen, dass es in der Regel nicht möglich ist, die Andrückplatte zu verschwenken und dann in den Arbeitsraum einzugreifen. Die Zeitdauer kann ggf. auch verkürzt werden. Der Fehlerzustand führt zu dem bereits beschriebenen Blockademodus, der durch eine blinkende Sicherheitskontrollleuchte signalisiert wird und der nur durch besondere Maßnahmen, wie oben beschrieben, überwunden werden kann.

## Patentansprüche

1. Gewerbeküchenmaschine (100) für die Zerkleinerung und/oder Durchmischung von Lebensmitteln, wenigstens umfassend:
- ein Grundgehäuse (60);
- einen Motor (40) mit einer Getriebeeinheit (41), welche eine Antriebswelle zur Verbindung mit einem Vorsatzgerät (70) aufweist;
- eine Motorregeleinheit zur Drehzahlsteuerung des Motors (40);
- einen Ein- und/oder Ausschalter, eine Drehzahleinstelleinheit und wenigstens ein Indikatorelement (13) zur Anzeige eines Betriebszustandes;
**dadurch gekennzeichnet,**
- **dass** die Motorregeleinheit ein Frequenzumrichter (30) ist und dass der Motor (40) ein Drehstrommotor ist, der über den Frequenzumrichter (30) angesteuert wird;
- **dass** ein Start-Taster (11) als Einschalter und ein Stopp-Taster (12) als Ausschalter vorgesehen sind;
- **dass** der Start- und der Stopp-Taster (11, 12) auf der Außenseite des Grundgehäuses (60) angeordnet sind und mit einer Bedienersteuerungseinheit (20) verbunden sind,
- **dass** der Start- und der Stopp-Taster (11, 12) jeweils einzeln mit einem separaten Logikeingang (LI1, LI4) des Frequenzumrichters (30) sowie mit einem gemeinsamen Steuerspannungseingang des Frequenzumrichters (30) verbunden sind;
- und **dass** die Bedienersteuerungseinheit (20) über einen Schaltausgang des Frequenzumrichters (30) aktivierbar ist.

2. Gewerbeküchenmaschine nach Anspruch 1, **dadurch gekennzeichnet, dass** der Frequenzumrichter (30) zum Anschluss an eine einphasige Wechselspannungsquelle ausgebildet ist.

3. Gewerbeküchenmaschine nach Anspruch 1 oder 2, **dadurch gekennzeichnet, dass** die Bedienersteuerungseinheit (20) wenigstens einen Drehzahlsollwertausgang aufweist, über welche Ausgänge die Bedienersteuerungseinheit (20) mit dem Frequenzumrichter (30) verbunden ist.

4. Gewerbeküchenmaschine nach einem der Ansprüche 1 bis 3, **dadurch gekennzeichnet, dass** ein Mikrocontroller in der Bedienersteuerungseinheit (20) über einen Optokoppler aktivierbar ist, der mit dem Schaltausgang des Frequenzumrichters (30) verbunden ist.

5. Gewerbeküchenmaschine nach einem der Ansprüche 1 bis 4, **dadurch gekennzeichnet, dass** ein Mikrocontroller in der Bedienersteuerungseinheit (20) aktivierbar ist, indem die Stromversorgung des Mikrocontrollers über den Schaltausgang des Frequenzumrichters (30) erfolgt.

6. Gewerbeküchenmaschine nach einem der Ansprüche 1 bis 5, **dadurch gekennzeichnet, dass** der der Start-Taster (11) als Schließer ausgebildet ist und der Stopp-Taster (12) als Öffner ausgebildet ist.

7. Gewerbeküchenmaschine nach Anspruch 6, **dadurch gekennzeichnet, dass** der Ruhestromkreis des Stopp-Tasters (12) durch ein mit dem Mikrocontroller verbundenes Relais (K1) zu unterbrechen ist.
